**Europäisches Patentamt**

**European Patent Office**

**Office européen des brevets**

(19)

(11) Numéro de publication: **0 160 030 B1**

(12) **FASCICULE DE BREVET EUROPEEN**

(45) Date de publication du fascicule du brevet:
**07.01.88**

(51) Int. Cl.⁴: **F 16 K 7/07**

(21) Numéro de dépôt: **84903810.4**

(22) Date de dépôt: **19.10.84**

(86) Numéro de dépôt international:
**PCT/FR 84/00238**

(87) Numéro de publication internationale:
**WO 85/01786 (25.04.85 Gazette 85/10)**

(54) **VANNE A MEMBRANE A COMMANDE PAR FLUIDE SOUS PRESSION.**

(30) Priorité: **21.10.83 FR 8316751**

(43) Date de publication de la demande:
**06.11.85 Builetin 85/45**

(45) Mention de la délivrance du brevet:
**07.01.88 Builetin 88/1**

(84) Etats contractants désignés:
**BE CH DE FR GB LI**

(73) Titulaire: **GACHOT S.A., 26 bis, Avenue de Paris, F-95230 Soisy-sous-Montmorency (FR)**

(72) Inventeur: **BIANCHI, Vittorio, 9, place de la Porte de Passy, F-75016 Paris (FR)**

(74) Mandataire: **Bouju, André, Cabinet Bouju 38 avenue de la Grande Armée, F-75017 Paris (FR)**

(56) Documents cités:
**DE - B - 1 082 466**
**FR - A - 1 121 902**
**FR - A - 1 243 744**
**US - A - 306 435**
**US - A - 2 828 101**
**US - A - 3 804 364**

ACTORUM AG

## Description

La présente invention concerne une vanne à membrane à commande par fluide sous pression, comprenant un corps tubulaire présentant une ouverture latérale, une membrane flexible formant dans l'ouverture latérale une cloison étanche entre d'une part l'intérieur du conduit et d'autre part une chambre de commande reliable à des moyens d'adduction du fluide de commande, de façon qu'en fonction de la pression du fluide de commande la membrane soit mobile entre une position de repos dans laquelle elle laisse l'intérieur du corps tubulaire libre pour l'écoulement commandé par la vanne, et une position de fermeture dans laquelle elle fait saillie dans le corps tubulaire de manière à entraver l'écoulement commandé, des moyens pour maintenir la membrane fixée de manière étanche contre la face extérieure du corps tubulaire au voisinage de l'ouverture, et des moyens de serrage des moyens de maintien.

Une telle vanne est connue d'après le FR-A- 1 243 744.

Selon la figure 1 de ce document, la membrane est tubulaire et elle est enserrée entre le conduit tubulaire intérieur, destiné à être parcouru par l'écoulement à commander, et un manchon extérieur. A chaque extrémité axiale de la vanne, la membrane tubulaire forme une collerette qui est enserrée entre un flasque du manchon et une bride rapportée extérieurement. La solidarisation de l'ensemble est assurée par des boulons axiaux à chaque extrémité.

Ce dispositif est complexe et lourd, et par conséquent coûteux. Il nécessite de nombreux usinages. De plus, il ne peut être monté sur une conduite préexistante qu'en sectionnant celle-ci.

On connaît par ailleurs, d'après la demande de brevet US-A- 3 064 935, une vanne dont la membrane est disposée à l'intérieur du corps tubulaire réalisé en deux parties situées de part et d'autre d'un plan diamétral. A chaque extrémité axiale, la membrane est raccordée d'un seul bloc avec un joint annulaire pincé entre deux brides, l'une appartenant au corps tubulaire et l'autre à l'extrémité adjacente de la tuyauterie. De plus, les deux bords de la membrane parallèles à l'axe du conduit tubulaire forment des lèvres qui sont pincées entre les bords des deux parties du corps tubulaire.

On aboutit là encore à une structure relativement complexe posant des problèmes d'étanchéité qui paraissent difficilement solubles aux deux extrémités de chaque ligne axiale de séparation entre les deux parties du corps tubulaire. Là encore, dans le cas d'une canalisation préexistante, celle-ci devra être sectionnée pour mettre en place la vanne.

Le but de l'invention est ainsi de proposer une vanne commandée par fluide dont la structure et le mode de mise en place soient particulièrement simples, et notamment qui puisse être mise en place sur une canalisation préexistante sans avoir à sectionner celle-ci.

Ce but est atteint dès lors que la membrane d'une part et les moyens de maintien d'autre part sont applicables latéralement sur le corps tubulaire, sans enfilage par une extrémité du corps tubulaire, et en ce que les moyens de serrage exercent sur le moyens de maintien une action dans une direction transversale au corps tubulaire.

Ainsi, l'ensemble de la vanne peut se monter par action latérale sur le corps tubulaire, qui peut être constitué par une simple tuyauterie dans laquelle on a pratiqué une ouverture latérale. L'invention rend donc inutile de sectionner la conduite dont cette tuyauterie fait partie. Ceci est particulièrement avantageux lorsqu'il s'agit d'équiper une installation préexistante. Toutefois, les moyens mis en oeuvre selon l'invention sont plus simples, moins coûteux, et plus faciles et rapides à mettre en place que ceux des dispositifs connus. C'est pourquoi l'invention est également avantageuse dans le cadre d'une installation nouvelle.

Selon une version avantageuse de l'invention, la membrane est pincée sur le pourtour entre les moyens de maintien et le côté externe du conduit. Ainsi, lors du serrage des moyens de maintien, une étanchéité très efficace est obtenue entre la membrane et le conduit.

Selon une réalisation préférée de l'invention, la membrane comporte au moins une partie renforcée formant clapet. Ainsi, lorsque l'on commande la fermeture de la membrane, la partie renforcée formant clapet s'étend en travers du conduit tubulaire et l'action du fluide contenu dans la canalisation s'ajoute à l'action du fluide de commande pour maintenir la vanne dans la position fermée.

Selon une variante de réalisation de l'invention, la membrane a une forme de poche et les moyens de maintien comportent des moyens d'étanchéité avec le côté externe du conduit. Ainsi, lors d'un gonflement partiel de la poche, celle-ci prend naturellement une position d'équilibre dans le courant de fluide s'écoulant dans le conduit et la perturbation sur l'écoulement est donc très faible.

D'autre caractéristiques et avantages résulteront encore de la description ci-après d'exemples non limitatifs en référence aux dessins annexés dans lequels:

la figure 1 est une vue en coupe transversale selon le plan I-I de la figure 2 d'un premier mode de réalisation de l'invention;

la figure 2 est une coupe longitudianale selon le plan II-II de la figure 1;

la figure 3 est une vue en bout d'une vanne comportant une variante de réalisation des moyens de serrage;

la figure 4 est une vue de dessous d'une variante de réalisation de membrane posée à plat;

la figure 5 est une vue en coupe longitudinale d'une vanne équipée de la membrane de la figure 4;

la figure 6 est une vue en coupe longitudianale d'une variante de réalisation comportant une membrane en forme de poche;

la figure 7 est une vue en coupe longitudinale d'une variante de réalisation d'une vanne comportant une membrane à soufflet.

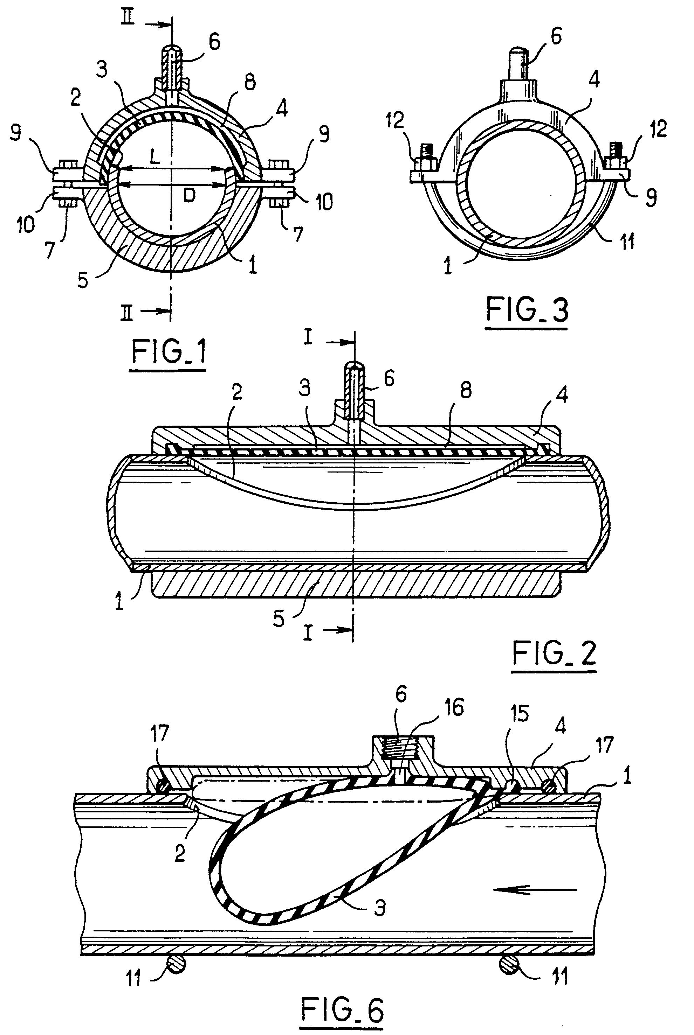

En se reportant aux figures 1 et 2, la vanne selon l'invention comporte un conduit 1, ici un tronçon de canalisation, percé d'une ouverture latérale 2 dont la dimension transversale L est inférieur au diamètre interne D du conduit 1. L'ouverture 2 est recouverte d'une membrane flexible 3, par exemple une membrane en caoutchouc maintenue en place par des moyens de maintien comprenant deux demi coquilles 4, 5 maintenues serrées l'une contre l'autre par des moyens de serrage comprenant des boulons 7 s'étendant transversalement à des goussets 9, 10 respectivement solidaires des deux demi coquilles 4, 5 et faisant saillie selon une direction radiale par rapport au conduit 1. La demi coquille 4 recouvre la membrane 3 sur tout son pourtour, de sorte que la membrane 3 est pincée sur le pourtour de l'ouverture 2 entre la demi coquille 4 et le côté externe du conduit 1. Les boulons 7 sont portés par les demi coquilles 4, 5 et exercent sur celles-ci une action transversale au conduit et extériere à celui-ci.

Les goussets 9, 10 sont de préférence au nombre de quatre et sont disposée de part et d'autre du conduit 1 à l'extrémité de chaque demi coquille.

La demi coquille 4 comporte également un tube d'alimentation 6 en fluide de commande, relié à une cavité interne 8 en regard de la paroi externe de la membrane 3.

Le fonctionnement du dispositif est le suivant: le pincement de la membrane 3 entre la demi coquille 4 et le côté externe du conduit 1 entourant l'ouverture 2 réalise une étanchéité, de sorte que le fluide circulant dans le conduit 1 ne peut s'échapper vers l'extérieur sans qu'il soit nécessaire de procéder sur le conduit 1 à d'autres usinages que celui destiné à former l'ouverture 2. Lorsque l'on souhaite fermer partiellement ou totalement la vanne, il suffit d'injecter par le tube 6 un fluide sous une pression supérieure à celle du fluide contenu dans le conduit 1. Ce fluide pénètre dans la cavité 8 et agit sur la membane 3 pourt faire fléchir celle-ci vers l'intérieur du conduit 1. Le fluide de commande peut être tout produit susceptible d'être porté à une pression supérieure à la pression interne du conduit 1. En particulier, le fluide de commande peut être aussi bien un gaz qu'un liquide ou même encore une pâte molle ou une poudre pouvant fluer sous l'effet d'un dispositif de commande représenté.

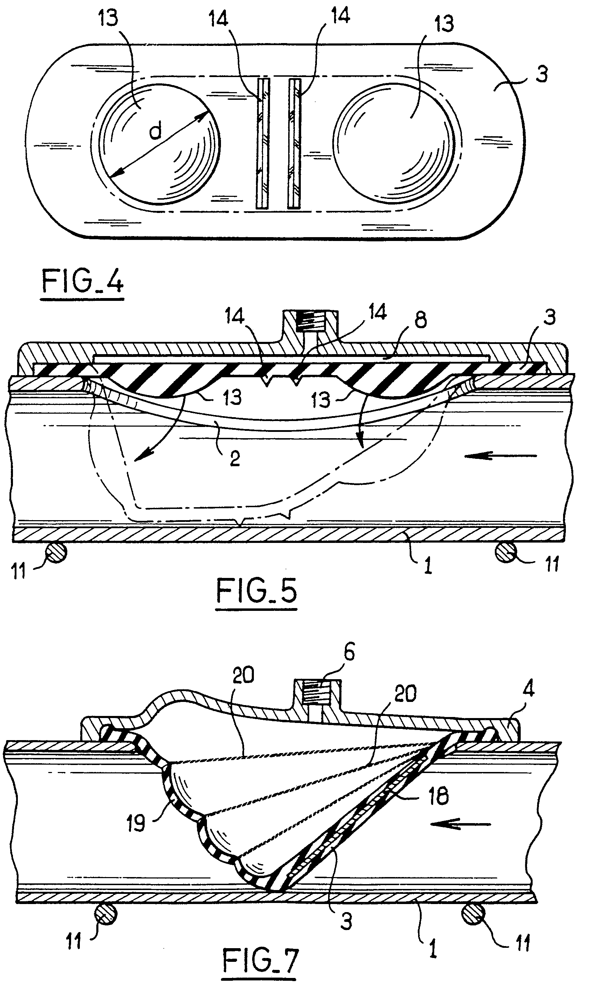

Dans la variante de réalisation illustrée par les figures 3 et 5, la demi coquille 5 et les boulons 7 ont été remplacés par des étriers 11 en forme de U ayant une partie médiane s'appuyant sur un côté du conduit 1 opposé à la demi coquille 4 et des extrémités s'étendant transversalement aux goussets 9. Les extrémités des étriers 11 sont maintenues par des écrous 12.

Sur la variante de réalisation illustrée par les figures 4 et 5, la membrane 3 comporte deux parties renforcées formant clapet 13. Sur le mode de réalisation représenté, les parties formant clapet 13 ont une forme de calotte sphérique ayant un sommet tourné vers l'intérieur du conduit. Le diamètre $d$ de chaque calotte au niveau de sa jonction avec la partie plane de la membrane 3 est légèrement inférieur à la dimension de l'ouverture 2 figurée sur la figure 4 par un trait mixte. Comme représenté en pointillés sur la figure 5, lors de la mise sous pression de la membane 3 par le fluide de commande, la calotte 13 disposée en aval par rapport à l'écoulement dans le conduit 1 pivote autour du bord extrème de l'ouverture 2 et forme un clapet rigide en travers du conduit 1, de sorte que la membrane 3 supporte des pressions élevées sans déformation excessive. On comprendra que dans le cas représenté, la membrane 3 comporte deux calottes 13 afin de permettre l'utilistion de la vanne selon une direction quelconque du fluide s'écoulant dans le conduit 1. On peut bein entendu prévoir une membrane 3 avec une seule partie renforcée, la vanne ayant alors un sens de montage préférentiel.

Sur le mode de réalisation illustré par les figures 4 et 5, la membane 3 comporte égalment sur sa surface interne deux nervures 14 transversales au conduit 1 et ayant une section triangulaire dont un des sommets est dirigé vers l'intérieur du conduit. Lors de l'obturation totale du conduit 1 par la membrane 3, au moins l'une des nervures 14 est maintenue appliquée sur la paroi interne du conduit 1 et réalise un contanct ponctuel permettant d'obtenir une bonne étanchéité entre la face interne de la membrane 3 et la surface interne du conduit 1, même si cette dernière comporte des irrégularités de surface.

Sur le mode de réalisation illustré par la figure 6, la membrane 3 a la forme d'une poche comportant un bourrelet de fixation 15 engagé dans une rainure correspondante de la demi coquille 4 et une ouverture 16 en regard de l'orifice d'alimentation 6 en fluide de commande. Dans ce cas, les moyens de maintien formés par la demi coquille 4 comportent en outre des moyens d'étanchéité formés, par exemple, par un joint torique 17 disposé dans une rainure de la demi coquille 4 tout autour de l'ouverture 2. Lorsque la poche est vide, elle s'escamote totalement et prend une position aplatie représentée par un trait mixte sur la figure 6. Lorqu'un fluide de commande est injecté dans la poche, celle-ci s'appuie d'un côté sur la paroi interne de la demi coquille 4 et s'étend de l'autre côté vers l'inérieur du conduit 1. Bien entendu, on prévoit avantageusement de fixer le bourrelet 15 en amont de la poche par rapport au sens d'écoulement du fluide à l'intérieur du conduit 1.

Dans le mode de réalisation illustré par la figure 7, la membrane 3 comporte un disque de rigidification 18 sur sa partie amont par rapport au sens d'écoulement du fluide dans le conduit 1 et une partie formant soufflet 19 sur la partie aval. De préférence, chaque alvéole de la partie formant soufflet 19 est reliée à la partie amont par une nappe de câbles souples 20. Ainsi, la membrane 3 peut être réalisée à partir d'un matériau flexible mais présentant une faible capacité à l'allongement.

Bien entendu, l'invention n'est pas limitée aux modes de réalisation décrits ci-dessus et on peut y apporter des variantes d'exécution.

En particulier, le conduit 1 peut comporter à ces extrémités des brides permettant son montage sur une canalisation comportant des brides de fixation complémentaires.

Bien que la vanne selon l'invention ait été décrite en liaison avec un conduit ayant une section circulaire, on comprend qu'elle est adaptabel à toutes formes de canalisation, l'adaption étant faite simplement en modifiant la forme de la paroi interne du moyen de maintien 4.

### Revendications

1. Vanne à membrane à commande par fluide sous pression, comprenant un corps tubulaire (1) présentant une ouverture latérale (2), une membrane flexible (3) formant dans l'ouverture latérale (2) une cloison étanche entre d'une parte l'intérieur du conduit (1) et d'autre part une chambre de commande (8) reliable à des moyens (6) d'adduction du fluide de commandes, de façon qu'en fonction de la pression du fluide de commande la membrane (3) soit mobile entre une position de repos dans laquelle elle laisse l'intérieur du corps tubulaire libre pour l'écoulement commandé par la vanne, et une position de fermeture dans laquelle elle fait saillie dans le corps tubulaire (1) de manière à entraver l'écoulement commandé, des moyens (4, 5) pour maintenir la membrane fixée de manière étanche contre la face extérieure du corps tubulaire au voisinage de l'ouverture, et des moyens (7, 11) de serrage des moyens de maintien, caractérisé en ce que la membrane (3) d'une part et les moyens de maintien (4, 5) d'autre part sont applicable latéralement sur le corps tubulaire, sans enfilage par une extrémité du corps tubulaire, et en ce que les moyens de serrage (7, 11) exercent sur les moyens de maintien une action dans une direction transversale au corps tubulaire (1).

2. Vanne conforme à la revendication 2, caractérisée en ce que la membrane (3) est pincée sur le pourtour de l'ouverture (2) entre les moyens de maintien (4, 5) et le côté externe du conduit.

3. Vanne conforme à la revendication 1 ou la revendication 2, caractérisée en ce que la membrane (3) comporte au moins une partie renforcée (13) formant clapet.

4. Vanne conforme à la revendication 3, caractérisée en ce que la partie renforcée formant clapet a une forme de calotte sphérique (13) ayant un sommet tourné vers l'intérieur du conduit.

5. Vanne conforme à l'une des revendications 1 ou 2, caractérisée en ce que la membrane (3) a une forme de poche et en ce que les moyens de maintien (4) comportent des moyens d'étanchéité (17) avec le côté externe du conduit.

6. Vanne conforme à l'une des revendications 1 à 3, caractérisée en ce que la membrane (3) comporte une partie formant un soufflet (19).

7. Vanne conforme à l'une des revendications 1 à 4, caractérisée en ce que la membrane (3) comporte au moins une nervure (14) transversale au conduit (1) et tournée vers l'intérieur de celui-ci.

8. Vanne conforme à la revendication 7, caractérisée en ce chaque nervure (14) a une section triangulaire.

9. Vanne conforme à l'une des revendications 1 à 8, caractérisée en ce que les moyens de maintien comportent deux demi coquilles (4, 5) disposées de part et d'autre du conduit (1) et en ce que les moyens de serrage comportent des boulons (7) s'étendant transversalement à des goussets (9, 10) lesquels goussets sont solidaires des deux demi coquilles et font saillie selon une direction radiale par rapport au conduit (1).

10. Vanne conforme à l'une des revendications 1 à 8, caractérisée en ce que les moyens de maintien comportent une demi-coquille (4) et en ce que les moyens de serrage comportent des étriers (11) en U ayant une partie médiane s'appuyant sur un côté du conduit opposé à la demi-coquille (4) et des extrémités s'étendant transversalement à des goussets (9), lesquels goussets sont solidaires de la demi coquille (4) et font saillie selon une direction radiale par rapport au conduit (1).

**Patentansprüche**

1. Membranventil mit Steuerung durch Druckmittelbeaufschlagung, versehen mit einem röhrenförmigen Körper (1), der eine seitliche Öffnung (2) aufweist, einer flexiblen Membran (3), die in der seitlichen Öffnung (2) eine dichte Trennwand zwischen einerseits der Innenseite der Leitung (1) und andererseits einer Steuerkammer (8) bildet, die mit Mitteln (6) zum Zuführen des Steuerfluids verbindbar ist, so dass, abhängig vom Druck des Steuerfluids, die Membran (3) zwischen einer Ruhelage, in der sie den Inneraum des röhrenförmigen Körpers für den vom Ventil gesteuerten Fluss freilässt, und einer Schliessposition bewegbar ist, in der sie im röhrenförmigen Körper (1) so vorsteht, dass die den gesteuerten Fluss behindert, Mitteln (4, 5), um die Membran dicht gegen die Aussenseite des röhrenförmigen Körpers in der Nähe der Öffnung befestigt zu halten, und Mitteln (7, 11) zum Spannen der Haltmittel, dadurch gekennzeichnet, dass die Membran (3) einerseits und die Haltmittel (4, 5) andererseits seitlich am röhrenförmigen Körper ohne Einführen durch eines seiner Enden angebracht werden können, und dass die Spannmittel (7, 11) auf die Haltemittel eine Wirkung in einer Querrichtung zum röhrenförmigen Körper (1) ausüben.

2. Ventil nach Anspruch 1, dadurch gekennzeichnet, dass die Membran (3) am Umfang der Öffnung (2) zwischen den Haltmitteln (4, 5) und der Aussenseite der Leitung eingeklemmt ist.

3. Ventil nach Anspruch 1 oder Anspruch 2, dadurch gekennzeichnet, dass die Membran (3) wenigstens einen verstärkten Teil (13) aufweist, der eine Ventilklappe bildet.

4. Ventil nach Anspruch 3, dadurch gekennzeichnet, dass der verstärkte Teil, welcher die Ventilklappe bildet, eine Kugelschalenform (13) aufweist, deren Scheitel zur Innenseite der Leitung gerichtet ist.

5. Ventil nach einem der Ansprüche 1 oder 2, dadurch gekennzeichnet, dass die Membran (3) taschenförmig ist und dass die Haltemittel (4) Dichtungsmittel (17) zur Abdichtung an der Aussenseite der Leitung umfassen.

6. Ventil nach einem der Ansprüche 1 bis 3, dadurch gekennzeichnet, dass die Membran (3) einen Teil aufweist, der einen Balg (19) bildet.

7. Ventil nach einem der Ansprüche 1 bis 4, dadurch gekennzeichnet, dass die Membran (3) wenigstens eine quer zur Leitung (1) verlaufende Rippe (14) aufweist, welche zur Innenseite der Leitung gewendet ist.

8. Ventil nach Anspruch 7, dadurch gekennzeichnet, dass jede Rippe (14) einen dreieckförmigen Querschnitt aufweist.

9. Ventil nach einem der Ansprüche 1 bis 8, dadurch gekennzeichnet, dass die Haltemittel zwei Halbschalen (4, 5) umfassen, welche auf der einen bzw. anderen Seite der Leitung (1) angeordnet sind, und dass die Spannmittel Schrauben (7) umfassen, welche sich quer zu Laschen (9, 10) erstrecken, die fest mit den zwei Halbschalen verbunden sind und in Radialrichtung zur Leitung (1) vorstehen.

10. Ventil nach einem der Ansprüche 1 bis 8, dadurch gekennzeichnet, dass die Haltemittel eine Halbschale (4) umfassen und dass die Spannmittel U-förmige Bügel (11) aufweisen, die einen Mittelteil besitzen, welcher sich auf einer der Halbschale (4) gegenüberliegenden Seite der Leitung abstützt, und Enden besitzen, die sich quer zu den Laschen (9) erstrecken, welche fest mit der Halbschale (4) verbunden sind und in Radialrichtung zur Leitung (1) vorstehen.

**Claims**

1. Diaphragm valve controlled by fluid under pressure, comprising a tubular body (1) having a lateral opening (2), a flexible diaphragm (3) forming within the lateral opening (2) a leak-tight partition between on the one hand the interior of the passageway (1) and on the other hand a control chamber (8) which can be connected to means (6) for supplying the control fluid in such a manner as to ensure that, as a function of the pressure of the control fluid, the diaphragm (3) is capable of moving between a rest position in which it leaves the interior of the tubular body free for the flow controlled by the valve and a closed position in which it projects within the tubular body (1) so as to obstruct the controlled flow, means (4, 5) for maintaining the diaphragm fixed in leak-tight manner against the external face of the tubular body in the vicinity of the opening, and means (7, 11) for clamping the maintaining means, characterized in that the diaphragm (3) on the one hand and the maintaining means (4, 5) on the other hand are applicable laterally against the tubular body without insertion through one end of the tubular body and that the clamping means (7, 11) exert action on the maintaining means in a direction transverse to the tubular body (1).

2. Valve in accordance with claim 1, characterized in that the diaphragm (3) is pinched along the periphery of the opening (2) between the maintaining means (4, 5) and the external wall of the passageway.

3. Valve in accordance with claim 1 or claim 2, characterized in that the diaphragm (3) has at least one reinforced portion (13) forming a valve-clack.

4. Valve in accordance with claim 3, characterized in that the reinforced portion forming a valve-clack has the shape of a spherical cap (13) having an apex directed towards the interior of the passageway.

5. Valve in accordance with either of claims 1 or 2, characterized in that the diaphragm (3) has the shape of a pocket and that the maintaining means (4) are provided with means (17) forming a tight seal with the external wall of the passageway.

6. Valve in accordance with one of claims 1 to 3, characterized in that the diaphragm (3) has a portion forming a bellows element (19).

7. Valve in accordance with one of claims 1 to 4, characterized in that the diaphragm (3) has at least one rib (14) which is transverse to the passageway (1) and is directed towards the interior of this latter.

8. Valve in accordance with claim 7, characterized in that each rib (14) has a triangular cross-section.

9. Valve in accordance with one of claims 1 to 8, characterized in that the maintaining means comprise two half-shells (4, 5) placed on each side of the passageway (1) and that the clamping means comprise bolts (7) which extend transversely to support brackets (9, 10) which are integral with the two half-shells and project in a radial direction with respect to the passageway (1).

10. Valve in accordance with one of claims 1 to 8, characterized in that the maintaining means comprise a half-shell (4) and that the clamping means comprise U-shaped stirrups (11) having a central portion applied against one side of the passageway which is remote from the half-shell (4) and end portions extending transversely with respect to support brackets (9) which are integral with the half-shell (4) and project in a radial direction with respect to the passageway (1).

FIG_1

FIG_3

FIG_2

FIG_6

FIG_4

FIG_5

FIG_7